# EUROPÄISCHE PATENTANMELDUNG

(11) **EP 1 921 348 A1**
(43) Veröffentlichungstag der Anmeldung: **14.05.2008**
(21) Anmeldenummer: 07019523.5
(22) Anmeldetag: 05.10.2007
(51) Int. Cl.: F16H 59/16

(54) **Fahrzeug mit einem Getriebe mit Drehmomentmesseinrichtung**

(30) Priorität: 08.11.2006 DE 102006052623
(71) Anmelder: Bayerische Motorenwerke Aktiengesellschaft, 80809 München (DE)
(72) Erfinder: Noack, Marko, 85452 Eichenried (DE); Bauchrowitz, Edmund, 85411 Hohenkammer (DE); Neubur, Roland, 86641 Oberpieching (DE)

(57) **Zusammenfassung**

Fahrzeug mit einem Getriebe, das mindestens eine Getriebekomponente aufweist, die während des Betriebs des Getriebes in Abhängigkeit von einer Drehmomentgröße gesteuert bzw. geregelt wird. Ferner ist ein Drehmomentsensor vorgesehen, der die Drehmomentgröße an einem Drehmoment übertragenden Bauteil misst.

## Beschreibung

Die vorliegende Erfindung betrifft ein Fahrzeug mit einem Getriebe gemäß dem Oberbegriff des Patentanspruches 1.

Für eine optimale Steuerung eines automatisierten Getriebes bzw. eines Automatikgetriebes wird das vom Getriebe momentan zu übertragende Drehmoment zumindest näherungsweise benötigt. In Abhängigkeit von dem momentan zu übertragenden Drehmoment werden vom Getriebesteuergerät Kupplungsdrücke, Schaltzeiten oder andere Getriebesteuerparameter eingestellt.

Bei herkömmlichen Fahrzeugen steht das aktuell vom Getriebe zu übertragende Drehmoment nur näherungsweise zur Verfügung. Näherungswerte werden anhand momentaner Motorbetriebsparameter aus einem in einem Motorsteuergerät abgelegten Motorkennfeld ermittelt. Das vom Motor gelieferte Drehmoment entspricht im Wesentlichen dem Getriebeeingangsmoment. Bei statischen Motorbetriebszuständen kann das Motorausgangs- bzw. Getriebeeingangsmoment relativ genau anhand gemessener Motorbetriebsparameter und des Motorkennfelds ermittelt werden. Bei dynamischen Motorbetriebszuständen hingegen, d. h. beim Beschleunigen oder Abbremsen, können sich relativ große Abweichungen zwischen dem aus den gemessenen Motorparametern und dem gespeicherten Motorkennfeld ermittelten Drehmoment und dem tatsächlich vom Motor gelieferten Getriebeeingangsmoment ergeben. Auch werden Randbedingungen, wie z. B. die Qualität des aktuell verwendeten Motorkraftstoffs, das Alter des Motors und ein damit gegebenenfalls einhergehender verschleißbedingter Leistungsabfall bei einer kennfeldbasierten Drehmomentermittlung nicht berücksichtigt.

Aufgabe der Erfindung ist es, ein Fahrzeug mit einem Getriebe zu schaffen, bei dem eine für Getriebesteuerung benötigte Drehmomentgröße möglichst genau zur Verfügung steht.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist ein Fahrzeug mit einem Getriebe, das mindestens eine Getriebekomponente aufweist, die während des Betriebs des Getriebes in Abhängigkeit von einer Drehmomentgröße gesteuert bzw. geregelt wird. Der Kern der Erfindung besteht darin, dass ein Drehmomentsensor vorgesehen ist, der die für die Getriebesteuerung bzw. -regelung verwendete Drehmomentgröße an einem Drehmoment übertragenden Bauteil misst.

Der große Vorteil gegenüber herkömmlichen Getriebesteuerungen besteht darin, dass die für die Getriebesteuerung bzw. -regelung verwendete Drehmomentgröße unmittelbar gemessen und nicht lediglich mittelbar aus Betriebsparametern des Antriebsmotors und einem Motorkennfeld ermittelt wird. Dadurch kann das tatsächlich vom Getriebe übertragene Drehmoment wesentlich genauer bestimmt werden, insbesondere während instationärer Betriebszustände. Insgesamt lässt sich dadurch eine über die gesamte Lebensdauer des Fahrzeugs verbesserte Schaltqualität erreichen.

Der Drehmomentsensor kann unmittelbar an einem Drehmoment übertragenden Bauteil des Getriebes, z. B. an der Getriebeeingangswelle angeordnet sein. Der Drehmomentsensor kann insbesondere innerhalb des Getriebegehäuses angeordnet sein.

Vorzugsweise wird ein berührungslos messender Sensor verwendet. Besonders geeignet erscheint ein Drehmomentsensor, der auf dem magnetostriktiven Messprinzip basiert. Derartige Drehmomentsensoren sind aus dem Stand der Technik bekannt und brauchen daher nicht näher beschrieben werden. Magnetostriktive Sensoren sind relativ kostengünstig. Vorzugweise ist der Drehmomentsensor so angeordnet, dass er Bedarf einfach ausgetauscht werden kann.

Das von dem Drehmomentsensor gelieferte Sensorsignal kann in einen CAN-Bus des Fahrzeugs eingespeist oder direkt dem Getriebesteuergerät zugeführt und für die Getriebesteuerung verwendet werden.

Die oben beschriebene Anordnung ist prinzipiell für alle automatisierten Handschaltgetriebe sowie für sämtliche Arten von Automatikgetrieben, aber auch für andere Getriebe geeignet, bei denen mindestens eine Komponente, wie z. B. eine Getriebekupplung, drehmomentabhängig angesteuert wird. Im Falle eines Automatikgetriebes kann der Drehmomentsensor in Kraftflussrichtung gesehen nach dem Wandler an der Getriebeeingangswelle angeordnet sein.

Das "Sensorsystem" kann um weitere Sensoren erweitert werden. Beispielsweise kann die mindestens eine ansteuerbare Getriebekomponente zusätzlich in Abhängigkeit einer oder mehrerer Drehzahl-, Drehrichtungs- oder Kraftgrößen gesteuert bzw. geregelt werden. Hierzu können entsprechende Drehzahl-, Drehrichtungs-oder Kraftsensoren vorgesehen sein, welche eine weitere Verbesserung der Schaltqualität und der Schaltgenauigkeit und somit der Getriebelebensdauer ermöglichen.

## Patentansprüche

1. Fahrzeug mit einem Getriebe, das mindestens eine Getriebekomponente aufweist, die während des Betriebs des Getriebes in Abhängigkeit von einer Drehmomentgröße gesteuert bzw. geregelt wird, **dadurch gekennzeichnet, dass** ein Drehmomentsensor vorgesehen ist, der die Drehmomentgröße an einem Drehmoment übertragenden Bauteil misst.

2. Fahrzeug nach Anspruch 1, **dadurch gekennzeichnet, dass** der Drehmomentsensor an einem Drehmoment übertragenden Bauteil des Getriebes angeordnet ist.

3. Fahrzeug nach Anspruch 1 oder 2, **dadurch gekennzeichnet, dass** der Drehmomentsensor in dem Getriebe, insbesondere innerhalb eines Getriebegehäuses des Getriebes, angeordnet ist.

4. Fahrzeug nach einem der Ansprüche 1 bis 3, **dadurch gekennzeichnet, dass** der Drehmomentsensor ein berührungslos messender Sensor ist.

5. Fahrzeug nach einem der Ansprüche 1 bis 4, **dadurch gekennzeichnet, dass** der Drehmomentsensor ein auf dem magnetostriktiven Messprinzip basierender Sensor ist.

6. Fahrzeug nach einem der Ansprüche 1 bis 5, **dadurch gekennzeichnet, dass** ein von dem Drehmomentsensor geliefertes Sensorsignal in einen CAN-Bus des Fahrzeugs eingespeist wird.

7. Fahrzeug nach einem der Ansprüche 1 bis 6, **dadurch gekennzeichnet, dass** ein von dem Drehmomentsensor geliefertes Sensorsignal einem Steuergerät des Getriebes zugeführt wird.

8. Fahrzeug nach einem der Ansprüche 1 bis 7, **dadurch gekennzeichnet, dass** der Drehmomentsensor an einer Eingangswelle des Getriebes angeordnet ist.

9. Fahrzeug nach einem der Ansprüche 1 bis 8, **dadurch gekennzeichnet, dass** das Getriebe ein Automatikgetriebe ist.

10. Fahrzeug nach einem der Ansprüche 1 bis 9, **dadurch gekennzeichnet, dass** am Eingang des Getriebes ein Drehmomentwandler angeordnet ist und dass der Drehmomentsensor an einer Getriebeeingangswelle und in Kraftflussrichtung gesehen nach dem Drehmomentwandler angeordnet ist.
